# EUROPEAN PATENT APPLICATION

(11) **EP 1 276 325 A2**
(43) Date of publication of application: **15.01.2003**
(21) Application number: 02015187.4
(22) Date of filing: 08.07.2002
(51) Int. Cl.: H04N 7/24

(54) **Mpeg encoding apparatus, mpeg decoding apparatus, and encoding program**

(30) Priority: 11.07.2001 JP 2001210459
(71) Applicant: MATSUSHITA ELECTRIC INDUSTRIAL CO., LTD., Kadoma-shi, Osaka-fu (JP)
(72) Inventor: Kato, Naoe, Toyota-shi, Aichi-ken (JP); Sugimoto, Keishi, Okazaki-shi, Aichi-ken (JP)
(74) Representative: Gassner, Wolfgang, Dr.

(57) **Abstract**

Provided is an MPEG encoding apparatus that prevents an influence of a portion of discontinuity that occurs in a partial TS when an analog stream is switched, from being exerted on video/audio reproduction at a decoding side. A CPU (21) holds a program number of a PAT for an analog stream before switching. When the analog stream is switched, the CPU (21) reports to a PAT generating section (15) a value of the program number that is different from the one held therein. The PAT generating section (15) generates the PAT containing the reported program number. Thereafter, an input stream switching section (11) switches the input stream according to an instruction from the CPU (21). Thus, an encoding side changes the program number of the PAT every time the stream is changed. With this, the decoding side can carry out muting and stop decoding based on the program number, thereby preventing the influence of the portion of discontinuity that occurs in the partial TS.

## Description

### BACKGROUND OF THE INVENTION

### Field of the Invention

The present invention relates to MPEG encoding apparatuses, MPEG decoding apparatuses, and encoding programs and, more specifically, to an MPEG encoding apparatus for generating an MPEG transport stream from an analog stream, an encoding program executable on the MPEG encoding apparatus, and an MPEG decoding apparatus for reproducing the MPEG transport stream generated by the MPEG encoding apparatus.

### Description of the Background Art

As well known, an MPEG encoding apparatus receives an analog stream, digitally converts it into a partial transport stream (hereinafter referred to as partial TS), and outputs the partial TS to an MPEG decoding apparatus. The partial TS outputted from the MPEG encoding apparatus is supplied to the MPEG decoding apparatus directly via a digital interface, or, as required, after once digitally recorded on a DVHS tape.

The partial TS is composed of a packet of an elementary stream (hereinafter, ES), which is a video or audio analog stream, and a packet containing a predetermined information table.

Typical example data formats of the information table contained in the partial TS are a Program Association Table (hereinafter, PAT) and a Program Map Table (hereinafter, PMT), both defined in STD-B10 of Association of Radio Industries and Businesses (ARIB), and a Discontinuity Information Table (hereinafter, DIT) and a Selection Information Table (hereinafter, SIT), both defined in STD-B21 of ARIB.

These information table formats are illustrated in FIGS. 21 to 24.

The PAT contains a service identifier (program_number) of a service transported on a partial TS (hereinafter, target service), a packet identifier of the PMT (program_map_PID: hereinafter, PMT_PID), and others (FIG. 21). The PMT contains the service identifier (program_number) of a target service, a packet identifier of a program clock reference (hereinafter, PCR) (PCR_PID), a packet identifier of a TS packet carrying the ES or payload of the target service (elementary_PID: hereinafter ES_PID), and others (FIG. 22). The DIT is inserted when the partial TS becomes discontinuous. The DIT contains a transition flag (transition_flag) indicating the type of change in the transport stream (FIG. 24). When a bit of the flag indicates "1", it is meant that the input stream has been changed.

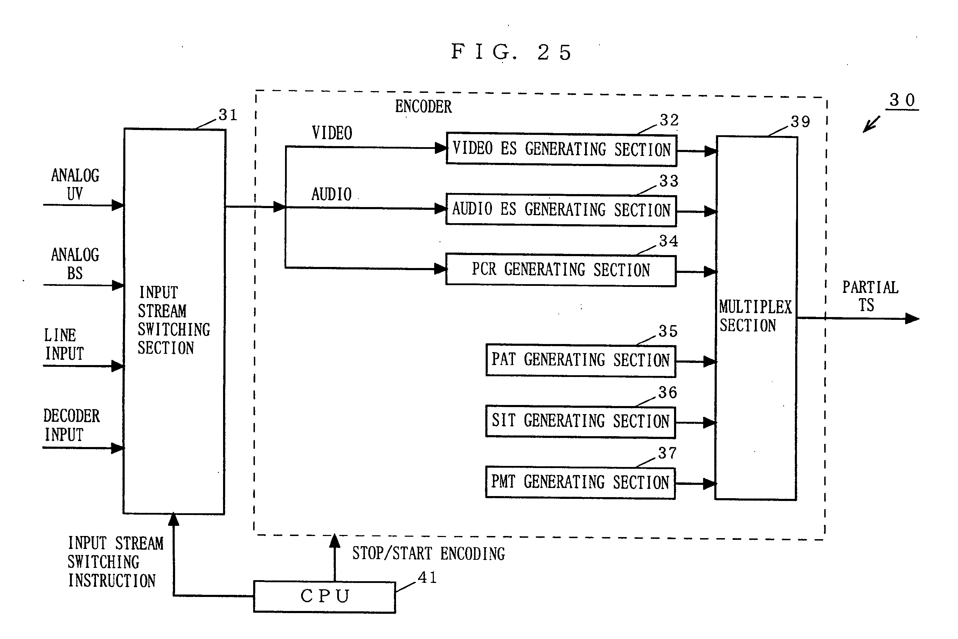

FIG. 25 is a block diagram illustrating the construction of a conventional MPEG encoding apparatus. A conventional MPEG encoding apparatus 30 includes an input stream switching section 31, a video ES generating section 32, an audio ES generating section 33, a PCR generating section 34, a PAT generating section 35, an SIT generating section 36, a PMT generating section 37, a multiplex section 39, and a CPU 41.

The input stream switching section 31 follows an instruction from the CPU 41 to select one of a plurality of input analog streams. The video ES generating section 32 digitizes and encodes a video analog stream if selected by the input stream switching section 31 for compression. The audio ES generating section 33 digitizes and encodes an audio analog stream if selected by the input stream switching section 31 for compression. The PCR generating section 34 generates a PCR for synchronizing video and audio with each other. The PAT generating section 35 generates a PAT; the SIT generating section 36 generates a SIT; and the PMT generating section 37 generates a PMT. The multiplex section 39 packetizes ESs and tables to make TS packets respectively provided with predetermined packet ID(s) as instructed by the CPU 41, and multiplexes them to generate a partial TS. The CPU 41 controls the entire MPEG encoding apparatus.

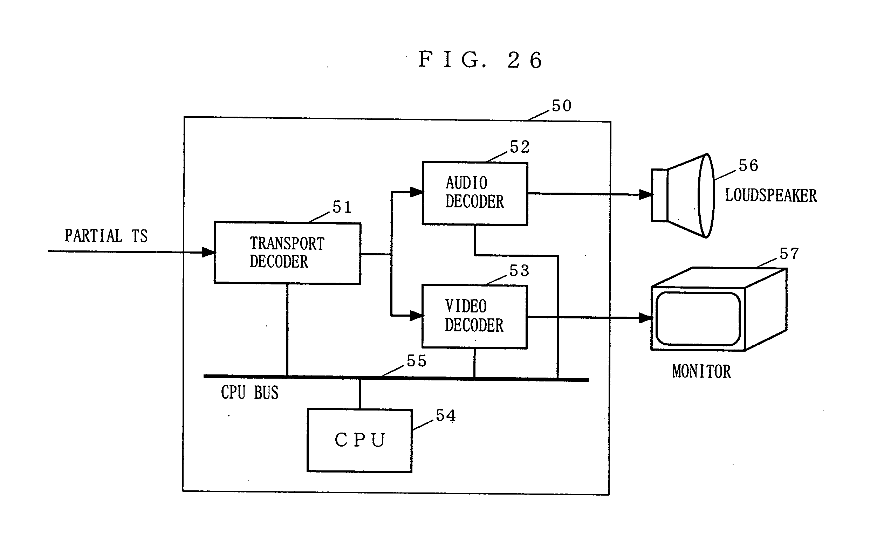

FIG. 26 is a block diagram illustrating the construction of the conventional MPEG decoding apparatus. This MPEG decoding apparatus 50 includes a transport decoder 51, an audio decoder 52, a video decoder 53, and a CPU 54.

The transport decoder 51 extracts a video or audio stream from a plurality of TS packets multiplexed as the partial TS. The audio decoder 52 decompresses and decodes the audio stream extracted from the transport decoder 51, converts it to analog, and then generates an audio signal. The generated audio signal is produced from a loudspeaker 56. The video decoder 53 decompresses and decodes the video stream extracted from the transport decoder 51, converts it to analog, and then generates a video signal. Based on the generated video signal, video is displayed on a screen on a monitor 57. The CPU 54 controls the entire MPEG decoding apparatus through a CPU bus 55 connected to the respective components for data transfer.

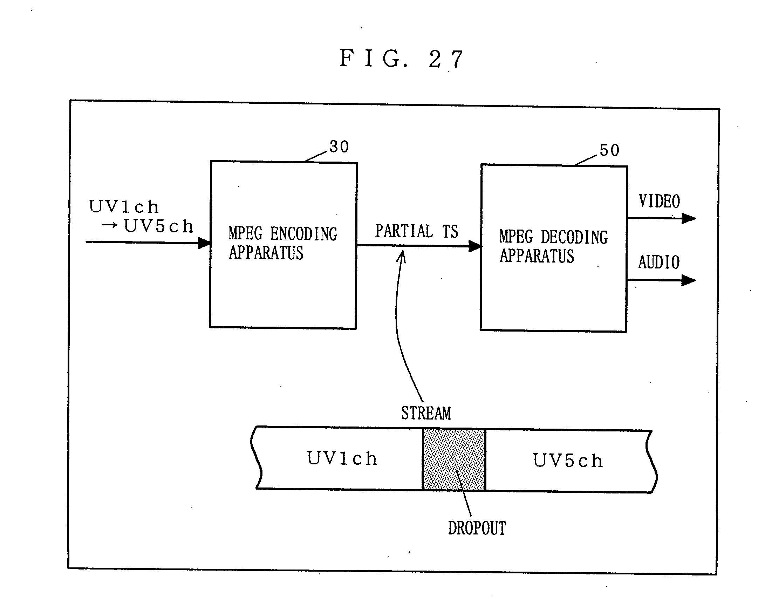

In the conventional MPEG encoding apparatus 30, when another analog stream is selected for encoding, the encoded stream becomes discontinuous for a certain period. Therefore, as illustrated in FIG. 27, the partial TS outputted from the MPEG encoding apparatus 30 has a dropout part between a stream (UHF-VHF 1ch, hereinafter UV1ch) and a stream (UHF-VHF 5ch, hereinafter UV5ch).

When such partial TS having a dropout part is reproduced by the conventional MPEG decoding apparatus 50, video or audio becomes distorted when a dropout part (a point of change in stream) of the partial TS is reproduced. Specifically, the last images on the stream before switching (UV1ch) may become freezed, because a new video stream is not coming to the MPEG decoding apparatus 50 that is ready for decoding with muting cancelled. Also, image distortion or audio noise may occur at the start of the stream after switching (UV5ch), because the stream before switching (UV1ch) remaining in the buffers of the video decoder 53 and the audio decoder 52 is combined with the stream after switching (UV5ch) to form a discontinuous stream for output.

To get around the above problem, the MPEG decoding apparatus 50 may be so designed as to not reproduce the dropout part in the partial TS. In the conventional MPEG encoding apparatus 30, however, the descriptions in the PAT, PMT, packet ID, etc., contained in the partial TS are not changed even when the output analog stream is switched. Also, the DIT is a table only inserted when the input stream is a digital stream. Therefore, the MPEG decoding apparatus 50 cannot determine whether there is a dropout part in the partial TS, and therefore cannot apply muting or stop decoding.

Also, in the conventional MPEG encoding apparatus 30, as described above, the descriptions in the PAT, PMT, packet ID, etc., contained in the partial TS are not changed even when the output analog stream is switched. Therefore, the MPEG decoding apparatus 50 side cannot provide a user with information about the currently selected channel by using the partial TS.

### SUMMARY OF THE INVENTION

Therefore, an object of the present invention is to provide an MPEG encoding apparatus enabling an MPEG decoding apparatus to determine whether there is a dropout part in a partial TS outputted from the MPEG encoding apparatus by appropriately changing a PAT, PMT, or packet ID contained in the partial TS according to a change in the selected analog stream.

Another object of the present invention is to provide an MPEG decoding apparatus capable of displaying information about the selected stream on a screen by changing program_number contained in a PAT into the one that can specify a channel.

The present invention has the following features to attain the object mentioned above.

A first aspect of the present invention is directed to an MPEG encoding apparatus that generates an MPEG transport stream from an analog stream, and the MPEG encoding apparatus includes:
an input stream switching section for selecting the analog stream from a plurality of input analog streams in response to a switching instruction; a video ES generating section for encoding and compressing video information of the analog stream selected by the input stream selecting section; an audio ES generating section for encoding and compressing audio information of the analog stream selected by the input stream selecting section; a table generating section for generating a predetermined information table required for encoding of the selected analog stream; and a multiplex section for multiplexing information generated by the video ES generating section, the audio ES generating section, and the table generating section, and outputting an encoded stream, wherein
when the input stream switching section selects another analog stream in response to another switching instruction, the table generating section generates the information table with a specific value contained therein updated so as to cause a decoding apparatus to stop decoding.

Here, the table generating section updates a service identifier of a service to be provided, the service identifier being contained in the information table for specifying a packet identifier (PID) of a TS packet for transmitting a service-related table; a PID of an elementary stream, the PID being contained in the information table for specifying a PID of a TS packet for transmitting the elementary stream composing a service; a PID of a program clock reference, the PID being contained in the information table for specifying a PID of a TS packet for transmitting the elementary stream composing a service; or a PID of a table related to a service to be provided, the PID being contained in the information table for specifying a PID of a TS packet for transmitting a service-related table.

In this case, the specific value to be updated is preferably program_number of a PAT, ES_PID of a PMT, PCR_PID of a PMT, or PMT_PID of a PAT. Typically, the specific value is updated by incrementing the specific value before switching. The updated specific value may be stored in a non-volatile memory, and may be read from the non-volatile memory for use when the MPEG encoding apparatus is turned on.

Also, instead of updating the specific value contained in the information table, a table containing information indicating a point of discontinuity in the encoded stream, exemplified by a DIT, may be generated, and inserted in the encoded stream.

As described above, in the first aspect, the encoding side changes program_number of the PAT according to switching of the input analog stream. With this change, the decoding side temporarily executes video and audio muting, stops decoding, and clears the buffers of the video decoder and the audio decoder. Therefore, even if the encoded stream outputted from the encoding side becomes discontinuous due to the change in the input analog stream, etc., a discontinuous part (dropout part) is not decoded. Therefore, stream reproduction can be carried out without causing distortion in video and audio.

A second aspect of the present invention is directed to an MPEG encoding apparatus that generates an MPEG transport stream from an input analog stream, and the MPEG encoding apparatus includes:
an input stream switching section for selecting the analog stream from a plurality of input analog streams in response to a switching instruction; a video ES generating section for encoding and compressing video information of the analog stream selected by the input stream selecting section; an audio ES generating section for encoding and compressing audio information of the analog stream selected by the input stream selecting section; a table generating section for generating a predetermined information table required for encoding of the selected analog stream; and a multiplex section for multiplexing information generated by the video ES generating section, the audio ES generating section, and the table generating section, and outputting an encoded stream, wherein
when the input stream switching section selects another analog stream in response to another switching instruction, the table generating section generates the information table with a specific value contained therein updated so as to cause a decoding apparatus to stop decoding, and the multiplex section temporarily stops outputting the encoded stream corresponding to the analog stream before switching, and then resumes outputting an encoded stream corresponding to the other analog stream selected in response to the other switching instruction.

Here, the table generating section generates the information table for specifying a PID of a TS packet for transmitting a service-related table, the information table containing an invalid service identifier of a service to be provided, so as to cause the multiplex section to stop outputting the encoded stream, and generates the information table with the PID updated so as to cause the multiplex section to resume outputting the encoded stream. Alternatively, the table generating section generates the information table for specifying a PID of a TS packet for transmitting an elementary stream composing a service, the information table not containing a PID of the elementary stream, so as to cause the multiplex section to stop outputting the encoded stream, and generates the information table with the PID of the elementary stream updated so as to cause the multiplex section to resume outputting the encoded stream. Still alternatively, the table generating section generates the information table for specifying a PID of a TS packet for transmitting an elementary stream composing a service, the information table containing an invalid PID of a program clock reference, so as to cause the multiplex section to stop outputting the encoded stream, and generates the information table with the PID of the program clock reference updated so as to cause the multiplex section to resume outputting the encoded stream.

In this case, the service identifier is preferably program_number, and the information table is a PAT; the PID of the elementary stream is ES_PID, and the information table is a PMT; or the PID of the program clock reference is PCR_PID, and the information table is a PMT.

As described above, according to the second aspect, when changing the specific value contained in the information table in response to switching of the input analog stream, the encoding side stops outputting the encoded stream for a predetermined period. With this, stream reproduction can be carried out without causing distortion in video or audio even in such an MPEG decoding apparatus as having a time lag between the time of detecting the change in the specific value and the time of muting and stopping decoding video and audio. Furthermore, temporary stop of encoding makes it possible to prevent unnecessary encoding during switching that would otherwise be performed by such an MPEG encoding apparatus as that requiring a long time for switching the analog stream in response to a channel switching instruction. Thus, it is possible to prevent noise occurring due to such unnecessary encoding.

A third aspect of the present invention is directed to an MPEG encoding apparatus that generates an MPEG transport stream from an analog stream, and the MPEG encoding apparatus includes:
an input stream switching section for selecting the analog stream from a plurality of input analog streams in response to a switching instruction; a video ES generating section for encoding and compressing video information of the analog stream selected by the input stream selecting section; an audio ES generating section for encoding and compressing audio information of the analog stream selected by the input stream selecting section; a table generating section for generating a predetermined information table required for encoding of the selected analog stream; and a multiplex section for multiplexing information generated by the video ES generating section, the audio ES generating section, and the table generating section, and outputting an encoded stream, wherein
the table generating section generates the information table for specifying a PID of a TS packet for transmitting a service-related table, the information table containing a service identifier of a service to be provided, the service identifier being uniquely varied according to a type or a channel number of the analog stream selected by the input stream switching section.

Here, preferably, the service identifier is program_number, and the information table is a PAT.

A fourth aspect of the present invention is directed to an MPEG decoding apparatus that reproduces an MPEG transport stream outputted from an encoding apparatus, wherein
at the time of reproducing, information about a stream is displayed based on a service identifier of a service to be provided, the service identifier contained in an information table for specifying a PID of a TS packet for transmitting a service-related table, the service identifier being uniquely varied by the encoding apparatus according to a type or a channel number of the stream.

Here, preferably, the service identifier is program_number, and the information table is a PAT.

As in the third and fourth aspects, if the program_number contained in the PAT is capable of uniquely identifying the stream, it is possible to provide playback channel display, recorded program list display, etc., that are easy to understand for users.

A fifth aspect of the present invention is directed to a program for making a computer device execute a method of generating an MPEG transport stream from an analog stream, and the method includes the steps of:
selecting the analog stream from a plurality of input analog streams in response to a switching instruction; encoding and compressing video information and audio information of the selected analog stream; generating a predetermined information table required for encoding of the selected analog stream, the information table with a specific value contained therein updated when another input analog stream is selected, so as to cause a decoding side to stop decoding; and multiplexing information generated in the encoding step and the generating step, and outputting an encoded stream.

Here, in the generating step, a service identifier of a service to be provided is updated, the service identifier being contained in the information table for specifying a packet identifier (PID) of a TS packet for transmitting a service-related table. Alternatively, in the generating step, a PID of an elementary stream is updated, the PID being contained in the information table for specifying a PID of a TS packet for transmitting the elementary stream composing a service. Still alternatively, in the generating step, a PID of a program clock reference is updated, the PID being contained in the information table for specifying a PID of a TS packet for transmitting the elementary stream composing a service. Still alternatively, in the generating step, a PID of a table related to a service to be provided is updated, the PID being contained in the information table for specifying a PID of a TS packet for transmitting a service-related table.

Alternatively, instead of updating the specific value contained in the information table, a table containing information indicating a point of discontinuity in the encoded stream may be generated and inserted in the encoded stream.

Alternatively, the method according to the fifth aspect may further includes the steps of: temporarily stopping outputting the encoded stream corresponding to the analog stream before switching; and resuming outputting the encoded stream corresponding to an analog stream selected next after a predetermined time has passed.

Here, in the generating step, the information table for specifying a PID of a TS packet for transmitting a service-related table is generated, the information table containing an invalid service identifier of a service to be provided, so that outputting the encoded stream is stopped, and the information table with the PID updated is generated so that outputting the encoded stream is resumed. Alternatively, in the generating step, the information table for specifying a PID of a TS packet for transmitting an elementary stream composing a service is generated, the information table not containing a PID of the elementary stream, so that outputting the encoded stream is temporarily stopped, and the information table with the PID of the elementary stream updated is generated so that outputting the encoded stream is resumed. Still alternatively, in the generating step, the information table for specifying a PID of a TS packet for transmitting an elementary stream composing a service is generated, the information table containing an invalid PID of a program clock reference, so that outputting the encoded stream is stopped, and the information table with the PID of the program clock reference updated is generated so that outputting the encoded stream is resumed.

A sixth aspect of the present invention is directed to a program for making a computer device execute a method of generating an MPEG transport stream from an analog stream, and the method includes the steps of:
selecting the analog stream from a plurality of input analog streams in response to a switching instruction; encoding and compressing video information and audio information of the selected analog stream; generating an information table, which is required for encoding of the selected analog stream, for specifying a PID of a TS packet for transmitting a service-related table, the information table containing a service identifier of a service to be provided, the service identifier being uniquely varied according to a type or a channel number of the analog stream; and multiplexing information generated in the encoding step and the generating step, and outputting an encoded stream.

A seventh aspect of the present invention is directed to a program for making a computer device execute a method of reproducing an MPEG transport stream outputted from an encoding apparatus, and the method includes the steps of:
interpreting a service identifier of a service to be provided, the service identifier contained in an information table for specifying PID of a TS packet for transmitting a service-related table, the service identifier being uniquely varied by the encoding apparatus according to a type or a channel number of a stream; and displaying, at the time of reproducing, information about the stream based on interpretation results obtained in the interpreting step.

These and other objects, features, aspects and advantages of the present invention will become more apparent from the following detailed description of the present invention when taken in conjunction with the accompanying drawings.

### BRIEF DESCRIPTION OF THE DRAWINGS

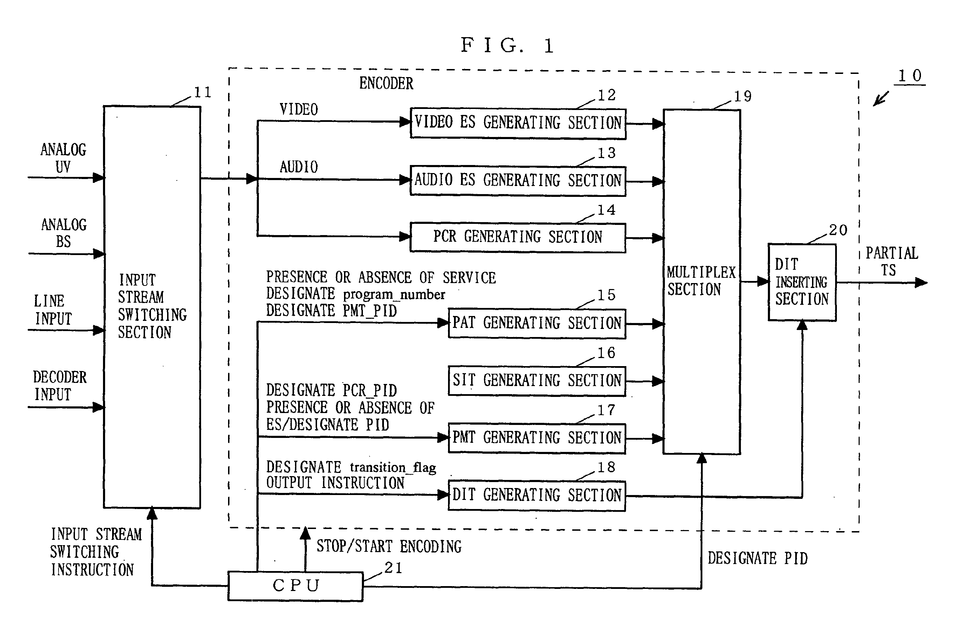

FIG. 1 is a block diagram illustrating the construction of an MPEG encoding apparatus according to embodiments of the present invention;

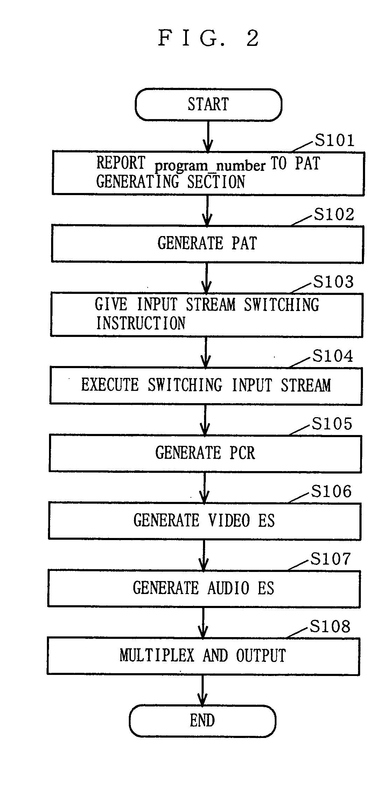

FIG. 2 is a flowchart showing the operation of the MPEG encoding apparatus when an input analog stream is switched in the first embodiment;

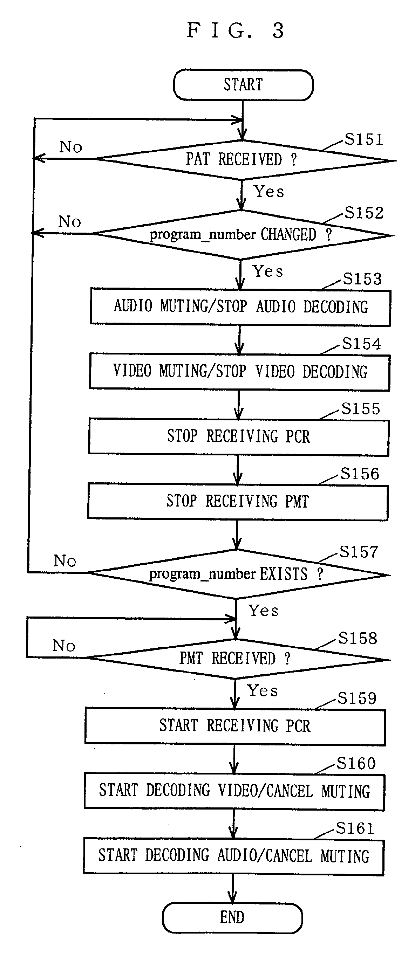

FIG. 3 is a flowchart showing the operation of the MPEG decoding apparatus when a partial TS encoded by following the flowchart of FIG. 2 is reproduced;

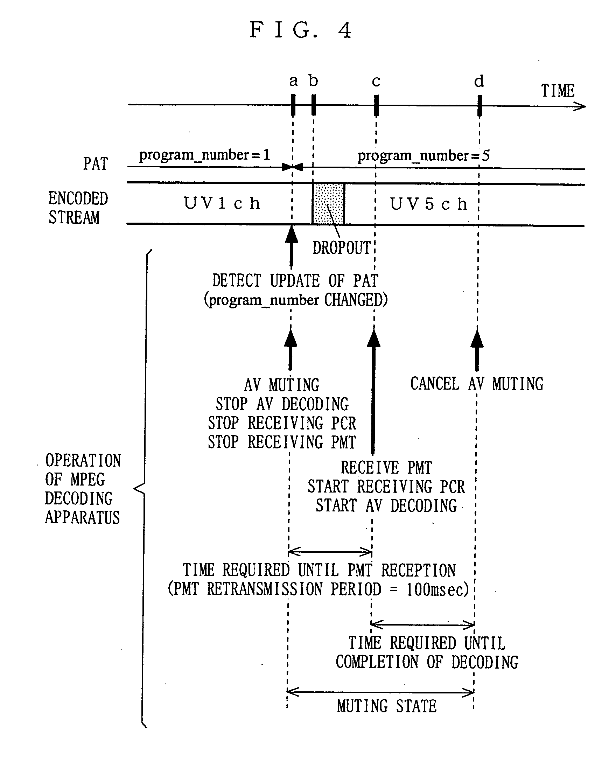

FIG. 4 is an illustration of the partial TS outputted from the MPEG encoding apparatus using a scheme in the first embodiment, and operation timing of the MPEG decoding apparatus;

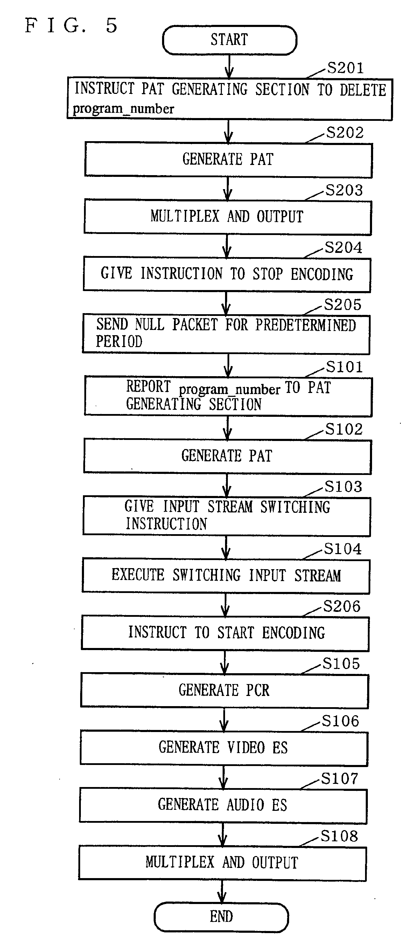

FIG. 5 is a flowchart showing the operation of the MPEG encoding apparatus when an input analog stream is switched in a second embodiment;

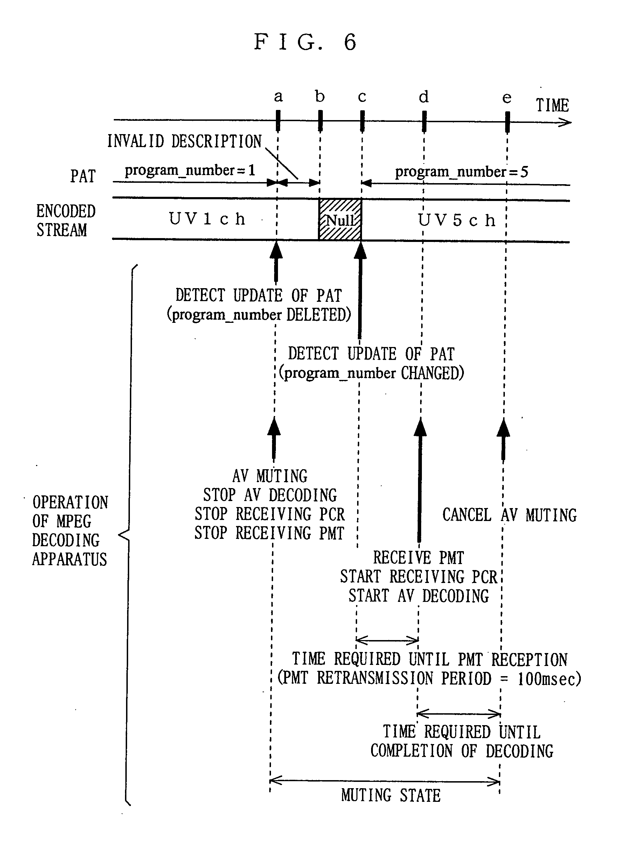

FIG. 6 is an illustration of a partial TS outputted from the MPEG encoding apparatus using a scheme in the second embodiment, and operation timing of the MPEG decoding apparatus;

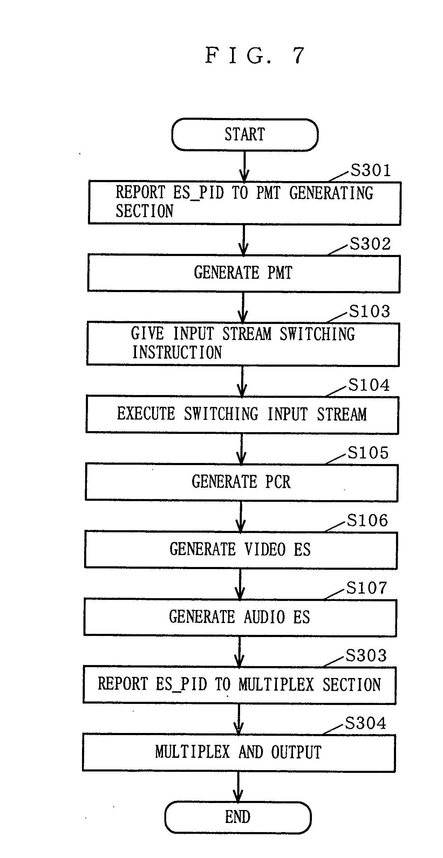

FIG. 7 is a flowchart showing the operation of the MPEG encoding apparatus when an input analog stream is switched in a third embodiment;

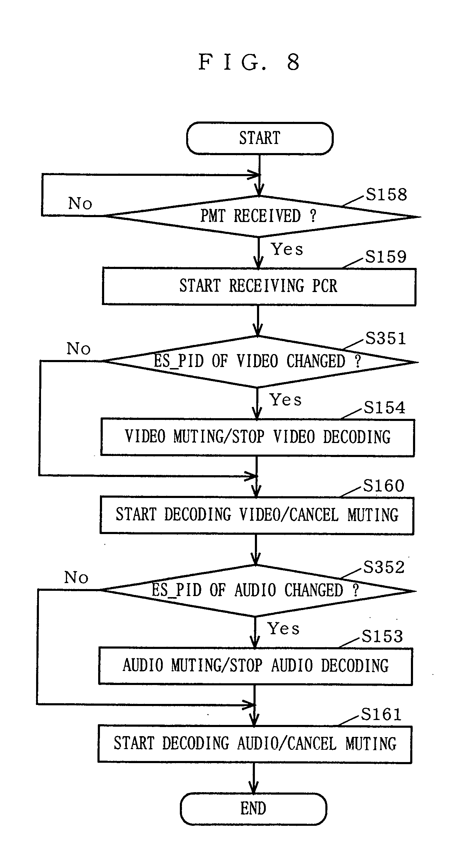

FIG. 8 is a flowchart showing the operation of the MPEG decoding apparatus when a partial TS encoded by following the flowchart of FIG. 7 is reproduced;

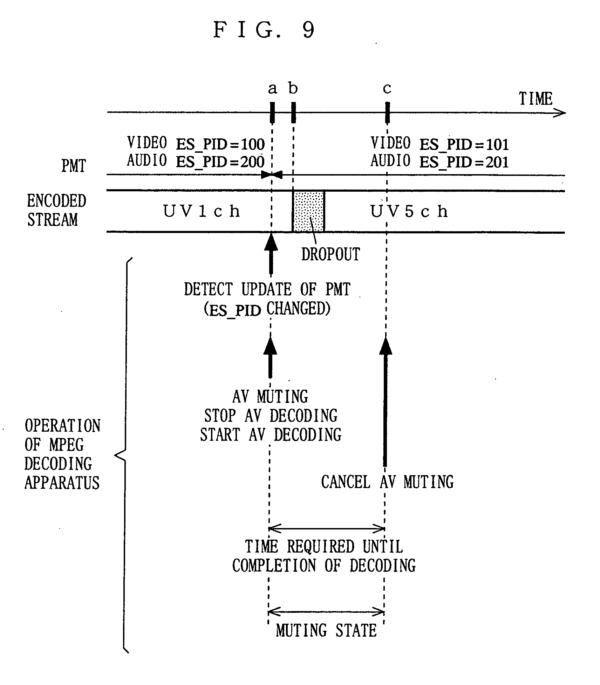

FIG. 9 is an illustration of the partial TS outputted from the MPEG encoding apparatus using a scheme in the third embodiment, and operation timing of the MPEG decoding apparatus;

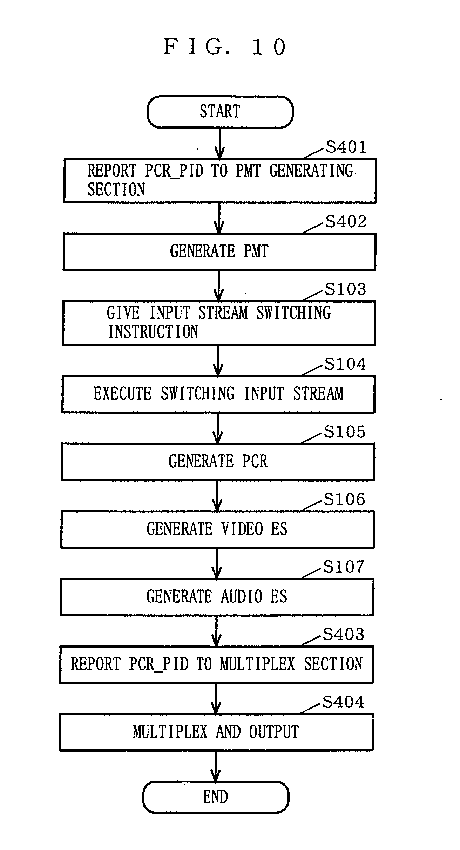

FIG. 10 is a flowchart showing the operation of the MPEG encoding apparatus when an input analog stream is switched in a fourth embodiment;

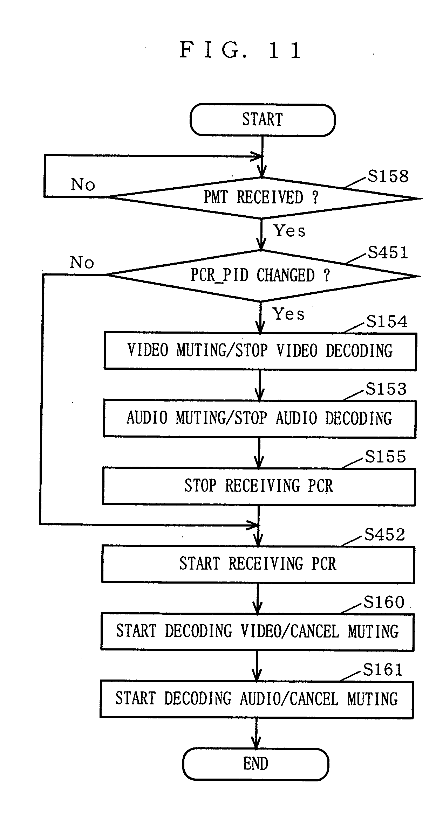

FIG. 11 is a flowchart showing the operation of the MPEG decoding apparatus when a partial TS encoded by following the flowchart of FIG. 10 is reproduced;

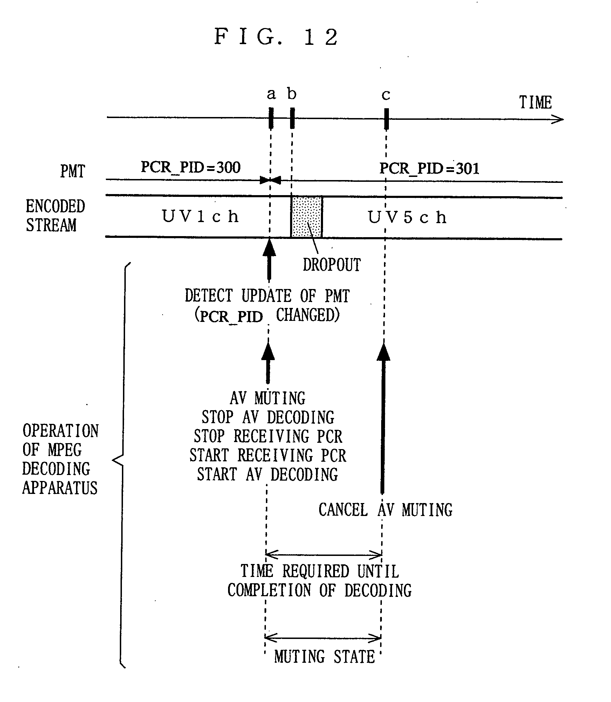

FIG. 12 is an illustration of the partial TS outputted from the MPEG encoding apparatus using a scheme in the fourth embodiment, and operation timing of the MPEG decoding apparatus;

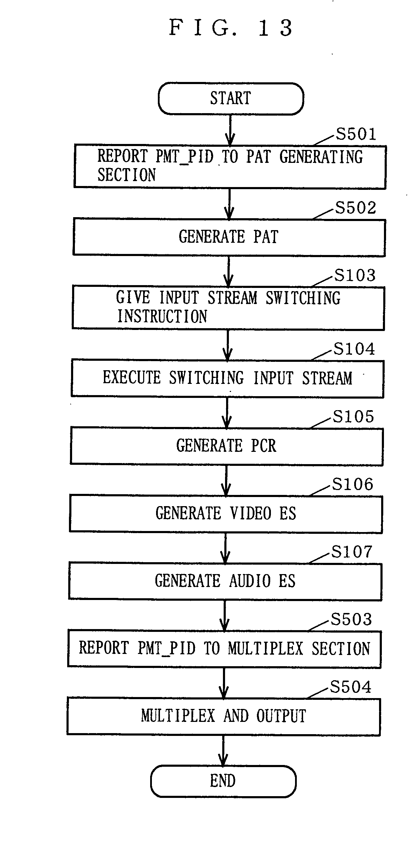

FIG. 13 is a flowchart showing the operation of the MPEG encoding apparatus when an input analog stream is switched in a fifth embodiment;

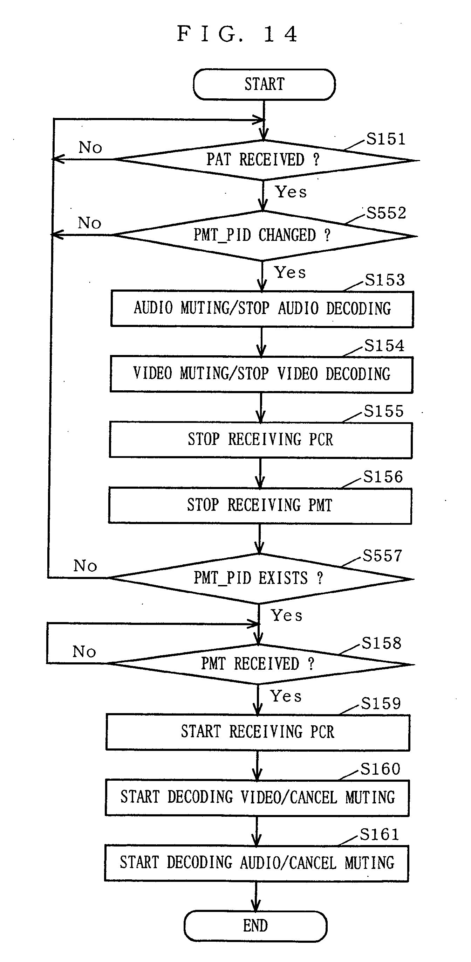

FIG. 14 is a flowchart showing the operation of the MPEG decoding apparatus when a partial TS encoded by following the flowchart of FIG. 13 is reproduced;

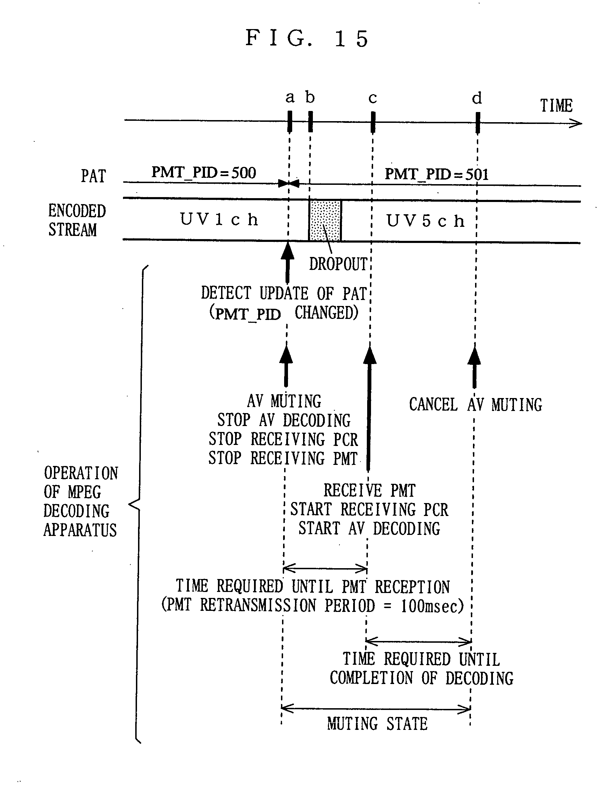

FIG. 15 is an illustration of the partial TS outputted from the MPEG encoding apparatus using a scheme in the fifth embodiment, and operation timing of the MPEG decoding apparatus;

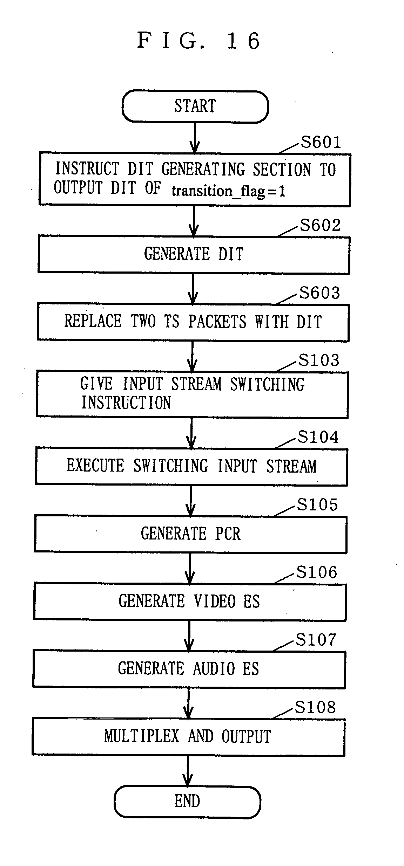

FIG. 16 is a flowchart showing the operation of the MPEG encoding apparatus when an input analog stream is switched in a sixth embodiment;

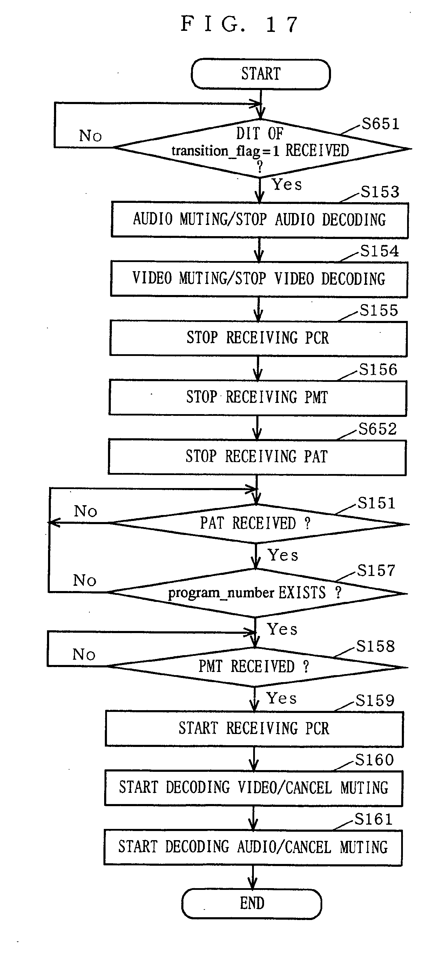

FIG. 17 is a flowchart showing the operation of the MPEG decoding apparatus when a partial TS encoded by following the flowchart of FIG. 16 is reproduced;

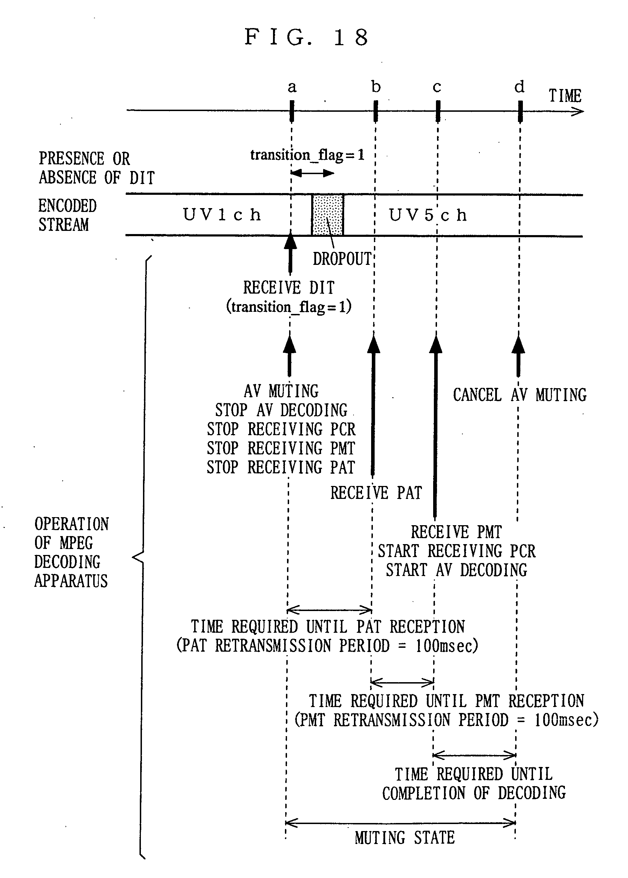

FIG. 18 is an illustration of the partial TS outputted from the MPEG encoding apparatus using a scheme in the sixth embodiment, and operation timing of the MPEG decoding apparatus;

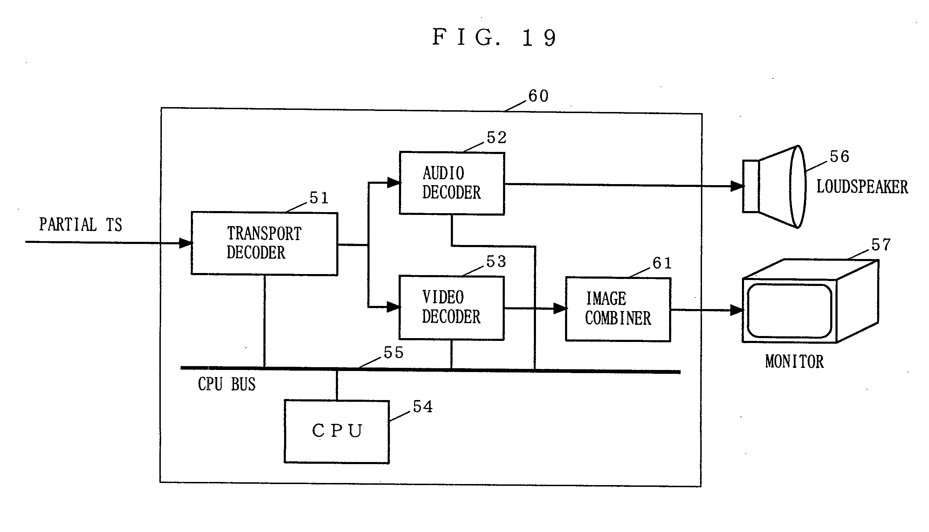

FIG. 19 is a block diagram illustrating the construction of an MPEG decoding apparatus according to a seventh embodiment;

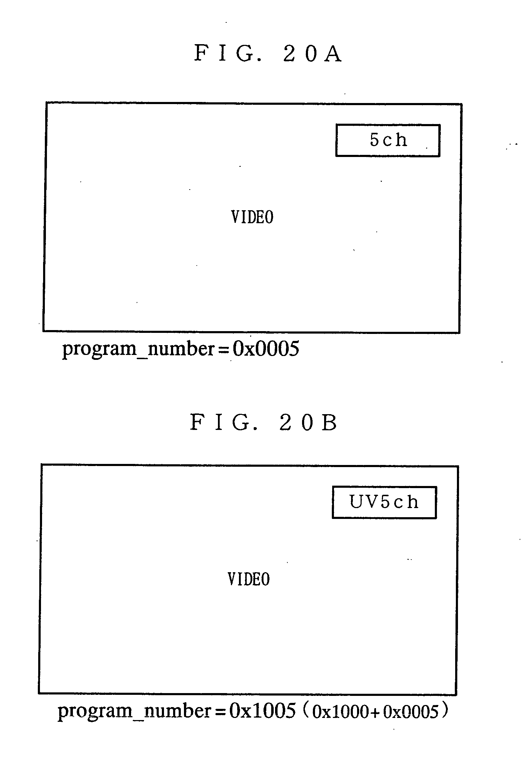

FIGS. 20A and 20B show example illustrations of screen display on a monitor illustrated in FIG. 19;

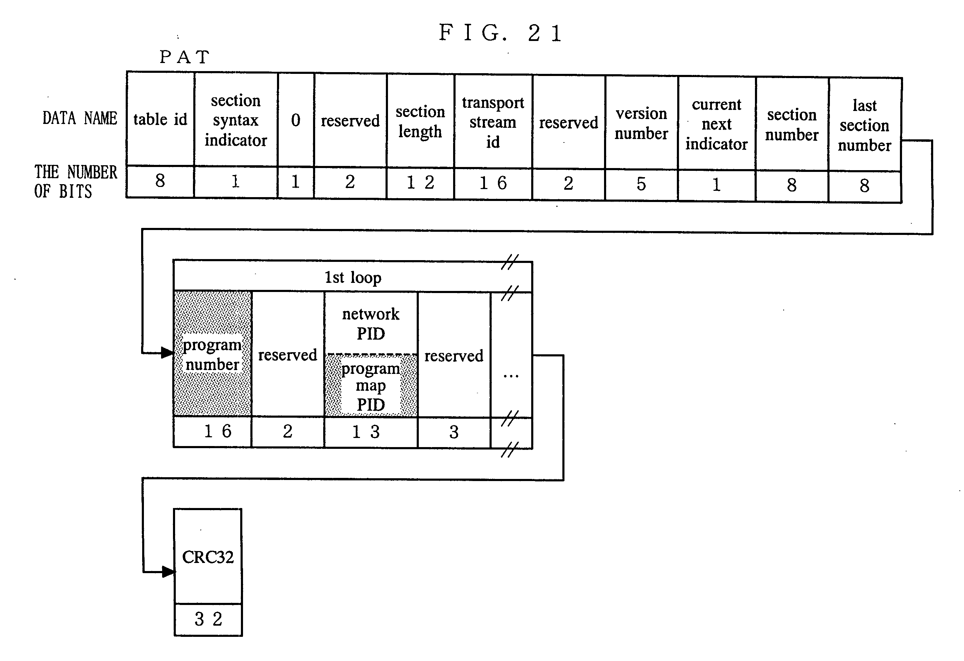

FIG. 21 is an illustration of a PAT format;

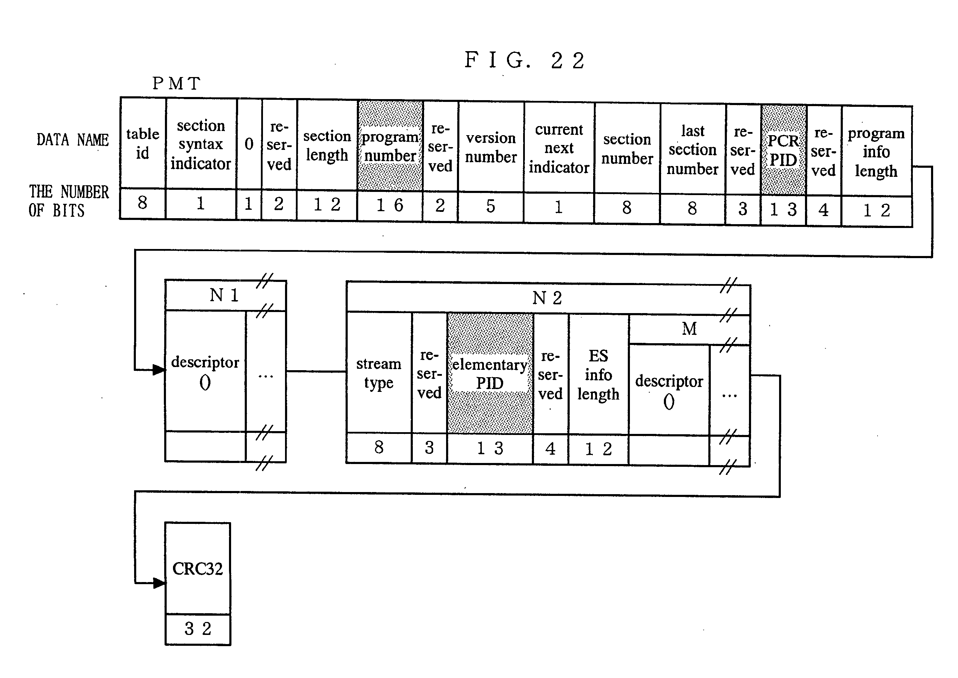

FIG. 22 is an illustration of a PMT format;

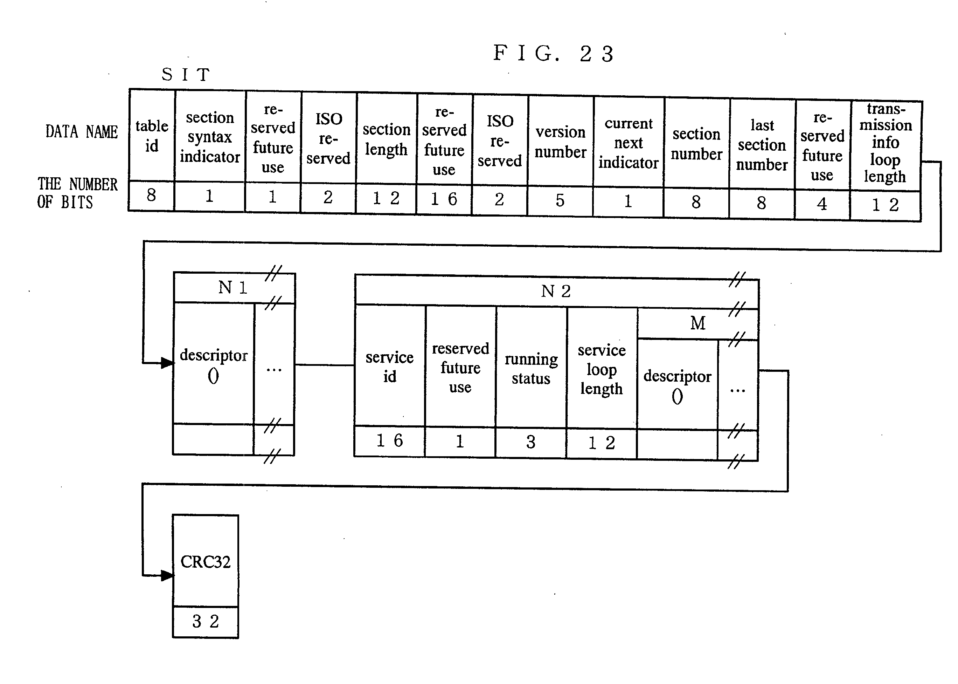

FIG. 23 is an illustration of an SIT format;

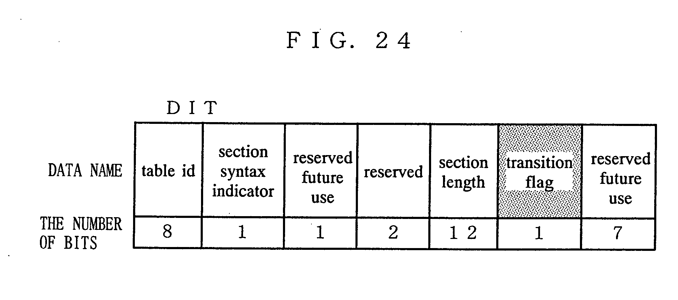

FIG. 24 is an illustration of a DIT format;
FIG. 25 is a block diagram illustrating the construction of a conventional MPEG encoding apparatus;
FIG. 26 is a block diagram illustrating the construction of a conventional MPEG decoding apparatus; and
FIG. 27 is an illustration for demonstrating a problem in a conventional MPEG encoding process.

### DESCRIPTION OF THE PREFERRED EMBODIMENTS

FIG. 1 is a block diagram illustrating the construction of an MPEG encoding apparatus according to embodiments of the present invention. In FIG. 1, an MPEG encoding apparatus 10 of the present invention includes an input stream switching section 11, a video ES generating section 12, an audio ES generating section 13, a PCR generating section 14, a PAT generating section 15, an SIT generating section 16, a PMT generating section 17, a DIT generating section 18, a multiplex section 19, a DIT inserting section 20, and a CPU 21.

The input stream switching section 11 follows an instruction from the CPU 21 to select one of a plurality of input analog streams. The video ES generating section 12 digitizes and encodes a video analog stream if selected by the input stream switching section 11 for compression. The audio ES generating section 13 digitizes and encodes an audio analog stream if selected by the input stream switching section 11 for compression. The PCR generating section 14 generates a PCR for synchronizing video and audio with each other. By following instructions from the CPU 21, the PAT generating section 15 generates a PAT; the SIT generating section 16 generates an SIT; the PMT generating section 17 generates a PMT; and the DIT generating section 18 generates a DIT. In these PAT, SIT, PMT, and DIT, program_number, a relevant PID, or transition_flag are changed. The multiplex section 19 packetizes ESs and tables to make TS packets respectively provided with predetermined packet ID(s) as designated by the CPU 21, and multiplexes the TS packets to generate a partial TS. A DIT inserting section 20 replaces part of packets contained in the partial TS with a DIT packet, as required. The CPU 21 controls the entire MPEG encoding apparatus, and carries out information management of program_number, PID, and transition_flag.

### (First embodiment)

The first embodiment is directed to a scheme of updating program_number of the PAT. Hereinafter described is the scheme according to the first embodiment with reference to FIGS. 2 to 4.

FIG. 2 is a flowchart showing the operation of the MPEG encoding apparatus 10 when the input analog streams is switched in the first embodiment. FIG. 3 is a flowchart showing the operation of the MPEG decoding apparatus 50 when a partial TS encoded by following the flowchart of FIG. 2 is reproduced through a digital interface standardized by IEEE 1394, for example.

With reference to FIG. 2, the operation of the MPEG encoding apparatus 10 is described.

The CPU 21 holds a value of program_number contained in the PAT for the analog stream before switching. When an instruction of switching the analog stream is issued, the CPU 21 reports a value different from the value of program_number held therein to the PAT generating section 15 (step S101). The PAT generating section 15 generates a PAT containing program_number reported by the CPU 21 (step S102). After the PAT is generated, the CPU 21 instructs the input stream switching section 11 to switch the analog stream (step S103). The input stream switching section 11 switches the analog stream as designated by the CPU 21 (step S104). The PCR generating section 14, the video ES generating section 12, and the audio ES generating section 13 encode the switched new analog stream (steps S105 to S107). The multiplex section 19 multiplexes the generated ESs and tables, and outputs a partial TS (step S108).

With reference to FIG. 3, described is the operation of the MPEG decoding apparatus 50.

The transport decoder 51 is supplied with the partial TS sent from the MPEG encoding apparatus 10. The transport decoder 51 then determines whether the PAT has been received (step S151). If received, the transport decoder 51 detects whether there is a change in the value of program_number contained in the PAT from a value of program_number contained in the PAT previously received (step S152). Here, the change means that the value of program_number contained in the PAT has been changed, or that invalid program_number has been written in the PAT. If the PAT has been changed, the transport decoder 51 executes video and audio muting (hereinafter AV (Audio-Video) muting), stops video and audio decoding (hereinafter AV (Audio-Video) decoding), stops receiving the PCR, and stops receiving the PMT (steps S153 through S156). After AV decoding is stopped, predetermined buffers (not shown) having video and audio streams stored therein are cleared. Then, while PATs containing invalid program_number are coming, AV muting and stopping operation are continued (step S157, No).

If the PAT contains valid program_number (step S157, Yes), the transport decoder 51 resumes receiving the PMT corresponding to a new changed program_number (step S158), and receives the PCR contained in the PMT (step S159). Then, the video decoder 53 starts decoding of video contained in the new PMT, and cancels video muting (step S160). The audio decoder 52 starts decoding of audio contained in the new PMT, and cancels audio muting (step S161).

FIG. 4 shows a relation between the partial TS outputted from the MPEG encoding apparatus 10 using the scheme according to the first embodiment, and operation timing of the MPEG decoding apparatus 50. A timing chart of FIG. 4 and others referred to in the following description exemplarily show a case where the channel is changed from UV1ch to UV5ch based on an instruction from the user for switching.

On receiving a channel switching instruction, the MPEG encoding apparatus 10 changes program_number of the PAT from "1" to "5" (timing *a*). The MPEG encoding apparatus 10 changes program_number, and then switches the analog stream from UV1ch to UV5ch (timing *b*).

The MPEG decoding apparatus 50 detects the change in program_number of the PAT to execute AV muting, stop AV decoding, stop receiving the PCR, and stop receiving the PMT (timing *a*). This stop of AV decoding deletes the UV1ch stream remaining in the buffers of the video decoder 53 and the audio decoder 52. On receiving a new PMT, the MPEG decoding apparatus 50 starts receiving PCR and AV decoding of UV5ch (timing *c*). Note that a cycle of PMT retransmission is 100msec. When a first decoding process on UV5ch is completed, the MPEG decoding apparatus 50 cancels AV muting (timing *d*).

As described above, according to the scheme of the first embodiment of the present invention, the encoding side changes program_number of the PAT according to switching of the input analog stream. With this change, the decoding side temporarily executes video and audio muting, stops decoding, and clears the buffers of the video decoder and the audio decoder. Therefore, even if the encoded stream outputted from the encoding side becomes discontinuous due to the change in the input analog stream, etc., a discontinuous part (dropout part) is not decoded. Therefore, stream reproduction can be carried out without causing distortion in video and audio.

Note that, the value of program_number to be reported to the PAT generating section 15, which is different from the value contained in the PAT before switching the analog stream, may be a value corresponding to a channel number, as exemplarily illustrated in FIG. 4, or a value obtained by incrementing the value being used before switching. Alternatively, the changed value of program_number may be cleared every time the MPEG encoding apparatus is turned OFF, or may be stored in a predetermined non-volatile memory so as to be held after the MPEG encoding apparatus is turned off. In the latter case, when the MPEG encoding apparatus is then turned on again, it is possible to read and use program_number stored in the non-volatile memory

### (Second embodiment)

A second embodiment is directed to a scheme of updating program_number of the PAT as in the first embodiment and, more specifically, to a scheme of stopping the encoding process when the input analog stream is switched. Hereinafter described is the scheme according to the second embodiment with reference to FIGS. 5 and 6.

FIG. 5 is a flowchart showing the operation of the MPEG encoding apparatus 10 when the input analog stream is switched in the second embodiment. Note that, in FIG. 5, steps of carrying out the same processes as those in FIG. 2 are provided with the same step numbers. Also note that the operation of the MPEG decoding apparatus 50 is the same as that shown in FIG. 3, and therefore is not described herein.

With reference to FIG. 5, the operation of the MPEG encoding apparatus 10 is described.

When an instruction of switching the analog stream is issued, the CPU 21 instructs the PAT generating section 15 to delete a description of program_number, that is, to write invalid program_number (step S201). Following the instruction from the CPU 21, the PAT generating section 15 generates a PAT containing invalid program_number (step S202). Such PAT generation is carried out at least once. The multiplex section 19 multiplexes the generated PAT(s) to output a partial TS (step S203). The CPU 21 then instructs each component to stop encoding (step S204). Note the multiplex section 19 sends NULL packets while encoding is stopped.

After the NULL packets are sent for a predetermined period (step S205), the CPU 21 reports a value of program_number that is different from the one held therein to the PAT generating section 15 (step S101). The PAT generating section 15 generates a PAT containing the value of program_number reported by the CPU 21 (step S102). After the PAT is generated, the CPU 21 instructs the input stream switching section 11 to switch the analog stream (step S103). The input stream switching section 11 switches the analog stream to the one designated by the CPU 21 (step S104). The CPU 21 then instructs each component to start encoding (step S206). The PCR generating section 14, the video ES generating section 12, and the audio ES generating section 13 encode the switched new analog stream (step S105 through S107). The multiplex section 19 multiplexes the generated ESs and tables to output a partial TS (step S108).

FIG. 6 shows a relation between the partial TS outputted from the MPEG encoding apparatus 10 using the scheme according to the second embodiment, and operation timing of the MPEG decoding apparatus 50.

When an instruction of switching the analog stream is issued, the MPEG encoding apparatus 10 outputs the PAT with program_number "1" deleted therefrom (timing *a*). After outputting such PATs with program_number deleted therefrom for a predetermined period, the MPEG encoding apparatus 10 stops encoding, and starts transmitting NULL packets (timing *b*). Then, after sending the NULL packets for a predetermined period, the MPEG encoding apparatus 10 changes program_number to "5" for switching the input from UV1ch to UV5ch (timing *c*).

The MPEG decoding apparatus 50 detects deletion of program_number of the PAT, and then executes AV muting, stops AV decoding, and stops receiving the PCR and the PMT for UV1ch (timing *a*). This stop of AV decoding deletes the UV1ch stream remaining in the buffers of the video decoder 53 and the audio decoder 52. After detecting the change in program_number of the PAT (timing *c*) and when receiving a new PMT, the MPEG decoding apparatus 50 starts receiving a PCR and starts AV decoding of UV5ch (timing *d*). When the first decoding process on UV5ch is completed, the MPEG decoding apparatus 50 cancels AV muting (timing *e*).

As described above, according to the scheme of the second embodiment of the present invention, the encoding side changes program_number of the PAT in response to switching of the input analog stream by generating a PAT containing invalid program_number and not outputting the encoded stream for a predetermined period. By generating the PAT containing invalid program__number, stream reproduction can be carried out without causing distortion in video or audio even in such an MPEG decoding apparatus as having a time lag between the time of detecting the change in program_number and the time of muting and stopping decoding video and audio. Furthermore, temporary stop of encoding makes it possible to prevent unnecessary encoding during switching that would otherwise be performed by such an MPEG encoding apparatus as that requiring a long time for switching the analog stream in response to a channel switching instruction. Thus, it is possible to prevent noise occurring due to such unnecessary encoding.

Note that, for applying the scheme of the second embodiment to such an MPEG decoding apparatus as that requiring a long time for receiving the PMT but having no problem in operation, the PAT containing program_number "5" may be generated instead of the PAT containing invalid program_number.

### (Third embodiment)

A third embodiment is directed to a scheme of updating ES_PID. Hereinafter described is the scheme of the third embodiment with reference to FIGS. 7 through 9.

FIG. 7 is a flowchart showing the operation of the MPEG encoding apparatus 10 when the input analog stream is switched in the third embodiment. FIG. 8 is a flowchart showing the operation of the MPEG decoding apparatus 50 when a partial TS encoded according to FIG. 7 is reproduced via a digital interface standardized in IEEE 1394, for example,. Note that, in FIGS. 7 and 8, steps of carrying out the same operations as those in FIGS. 2 and 3 are provided with the same step numbers.

With reference to FIG. 7, the operation of the MPEG encoding apparatus 10 is described.

The CPU 21 holds values of PIDs of video ESs and audio ESs of an analog stream before switching. When an instruction of switching the analog stream is issued, the CPU 21 reports a value of ES_PID that is different from the one held therein to the PMT generating section 17 (step S301). The PMT generating section 17 generates a PMT containing ES_PID reported by the CPU 21 (step S302). After the PMT is generated, the CPU 21 instructs the input stream switching section 11 to switch the analog stream (step S103). The input stream switching section 11 switches the analog stream into the one designated by the CPU 21 (step S104). The PCR generating section 14, the video ES generating section 12, and the audio ES generating section 13 encode the switched new analog stream (step S105 though S107). The CPU 21 reports the value of ES_PID to the multiplex section 19 (step S303). The multiplex section 19 provides ES_PID reported by the CPU 21 to the video ES and the audio ES, multiplexes the ESs and the tables, and outputs a partial TS (step S304).

With reference to FIG. 8, the operation of the MPEG decoding apparatus 50 is described.

The transport decoder 51 is supplied with the partial TS sent from the MPEG encoding apparatus 10. The transport decoder 51 then determines whether a PMT has been received (step S158). If received, the transport decoder 51 starts receiving the PCR contained in the PMT (step S159). The transport decoder 51 then detects whether the value of video ES_PID has been changed from the one previously received (step S351). If changed, the transport decoder 51 executes video muting and stops decoding (step S154). Thereafter, the video decoder 53 starts decoding of video contained in the received PMT and, after decoding is completed, cancels video muting (step S160). The transport decoder 51 then detects whether the value of audio ES_PID is changed from the one previously received (step S352). If changed, the transport decoder 51 executes audio muting and stops decoding (step S153). Thereafter, the audio decoder 52 starts decoding of audio contained in the received PMT, and after decoding is completed, cancels audio muting (step S161).

FIG. 9 shows a relation between a partial TS outputted from the MPEG encoding apparatus 10 using the scheme of the third embodiment and operation timing of the MPEG decoding apparatus 50.

On receiving an instruction of channel switching, the MPEG encoding apparatus 10 changes ES_PID for video and ES_PID for audio contained in the PMT from "100" to "101" and from "200" to "201", respectively (timing *a*). The MPEG encoding apparatus 10 then switches the analog stream from UV1ch to UV5ch (timing *b*).

The MPEG decoding apparatus 50 detects the changes in ES_PIDs contained in the PMT, and executes AV muting and stops AV decoding for UV1ch (timing *a*). This stop of AV decoding deletes the stream of UV1ch remaining in the buffers of the video decoder 53 and the audio decoder 52. The MPEG decoding apparatus 50 then starts AV decoding and, when decoding is completed, cancels AV muting (timing *c*).

As described above, according to the scheme of the third embodiment of the present invention, the encoding side changes ES_PID contained in the PMT in response to switching of the input analog stream. With this change, the decoding side temporarily executes video and audio muting, stops decoding, and clears the buffers of the video decoder and the audio decoder. Thus, even if the encoded stream outputted from the encoding side becomes discontinuous due to the change in the input analog stream, stream reproduction can be carried out without causing distortion in video and audio.

In the third embodiment, the case where switching of the input analog stream is carried out without stopping encoding has been described. Alternatively, encoding may be stopped by generating a PMT with ES_PID deleted therefrom, then a PMT, video ES, audio ES each provided with a new PID may be generated for resuming encoding (refer to the second embodiment).

### (Fourth embodiment)

A fourth embodiment is a scheme of updating the PID of the PCR. Hereinafter described is the scheme of the fourth embodiment with reference to FIGS. 10 through 12.

FIG. 10 is a flowchart showing the operation of the MPEG encoding apparatus 10 when the input analog stream is switched in the fourth embodiment. FIG. 11 is a flowchart showing the operation of the MPEG decoding apparatus 50 when the partial TS encoded according to FIG. 10 is reproduced via a digital interface standardized in IEEE 1394, for example. Note that, in FIGS. 10 and 11, steps carrying out the same processes as those in FIGS. 2 and 3 are provided with the same step numbers.

With reference to FIG. 10, the operation of the MPEG encoding apparatus 10 is described.

The CPU 21 holds a value of PCR_PID for the analog stream before switching. When an instruction of switching the analog stream is issued, the CPU 21 reports a value of PCR_PID that is different from the one held therein to the PMT generating section 17 (step S401). The PMT generating section 17 generates a PMT containing PCR_PID reported by the CPU 21(step S402). After the PMT is generated, the CPU 21 instructs the input stream switching section 11 to switch the analog stream (step S103). The input stream switching section 11 switches the analog stream to the one designated by the CPU 21 (step S104). The PCR generating section 14, the video ES generating section 12, and the audio ES generating section 13 encode the switched new analog stream (steps S105 through S107). The CPU 21 reports the value of PCR_PID to the multiplex section 19 (step S403). The multiplex section 19 provides PCR_PID designated by the CPU 21 to ESs and tables, and multiplexes them to output a partial TS (step S404).

With reference to FIG. 11, the operation of the MPEG decoding apparatus 50 is described.

The transport decoder 51 is supplied with the partial TS sent from the MPEG encoding apparatus 10. The transport decoder 51 determines whether the PMT has been received (step S158). If received, the transport decoder 51 detects whether the value of PCR_PID contained in the PMT has been changed from the one previously received (step S451). If the value of PCR_PID has been changed, the transport decoder 51 executes video and audio muting, stops video and audio decoding, and stops receiving the PCR (step S153 through S155). The transport decoder 51 receives a PCR contained in a new PMT (step S452). The video decoder 53 starts decoding video contained in the received PMT and, after decoding is completed, cancels video muting (step S160). The audio decoder 52 starts decoding audio contained in the received PMT and, after decoding is completed, cancels audio muting (step S161).

FIG. 12 shows a relation between the partial TS outputted from the MPEG encoding apparatus 10 using the scheme of the fourth embodiment and the operation timing of the MPEG decoding apparatus 50.

When an instruction of switching the analog stream is issued, the MPEG encoding apparatus 10 changes PCR_PID of the PMT from "300" to "301" (timing *a*). The MPEG encoding apparatus 10 then switches the analog stream from UV1ch to UV5ch (timing *b*).

The MPEG decoding apparatus 50 detects the change in PCR_PID of the PMT, and executes AV muting, stops AV decoding, and stops receiving the PCR for UV1ch (timing *a*). With AV decoding being stopped, the UV1ch stream remaining in the buffers of the video decoder 53 and the audio decoder 52 is deleted. The MPEG decoding apparatus 50 then starts receiving a new PCR and AV decoding and, when decoding is completed, cancels AV muting.

As such, according to the scheme of the fourth embodiment of the present invention, the encoding side changes PCR_PID of the PMT according to switching of the input analog stream. With this change, the decoding side temporarily executes video and audio muting, stops decoding, and clears the buffers of the video decoder and the audio decoder. Therefore, even if the encoded stream outputted from the encoding side becomes discontinuous due to the change in the input analog stream, stream reproduction can be carried out without causing distortion in video and audio.

In the fourth embodiment, the case where switching of the input analog stream is carried out without stopping encoding has been described. Alternatively, encoding may be stopped by generating a PMT containing invalid PCR_PID, and then a PMT and a PCR each provided with a new PID may be generated for resuming encoding (refer to the second embodiment).

### (Fifth embodiment)

A fifth embodiment is directed to a scheme of updating PMT_PID of the PAT. Hereinafter described is the scheme of the fifth embodiment with reference to FIGS. 13 to 15.

FIG. 13 is a flowchart showing the operation of the MPEG encoding apparatus 10 when the input analog stream is switched in the fifth embodiment. FIG. 14 is a flowchart showing the operation of the MPEG decoding apparatus 50 when a partial TS encoded according to FIG. 13 is reproduced via a digital interface standardized in IEEE 1394, for example. Note that, in FIGS. 13 and 14, steps of carrying out the same operations as those in FIGS. 2 and 3 are provided with the same step numbers.

With reference to FIG. 13, the operation of the MPEG encoding apparatus 10 is described.

The CPU 21 holds a value of PMT_PID of the analog stream before switching. When an instruction of switching the analog stream is issued, the CPU 21 reports a value of PMT_PID that is different from the value held therein to the PAT generating section 15 (step S501). The PAT generating section 15 generates a PAT containing PMT_PID reported by the CPU 21 (step S502). The CPU 21 then instructs the input stream switching section 11 to switch the analog stream (step S103). The input stream switching section 11 switches the analog stream to the one designated by the CPU 21 (step S104). The PCR generating section 14, the video ES generating section 12, and the audio ES generating section 13 encode the switched new analog stream (steps S105 through S107). The CPU 21 reports the value of PMT_PID to the multiplex section 19 (step S503). The multiplex section 19 provides PMT_PID reported by the CPU21 to ESs and tables, and multiplexes them to output a partial TS (step S504).

With reference to FIG. 14, the operation of the MPEG decoding apparatus 50 is described.

The transport decoder 51 is supplied with the partial TS sent from the MPEG encoding apparatus 10. The transport decoder 51 determines whether any PAT has been received (step S151). If received, the transport decoder 51 detects whether the value of PMT_PID contained in the received PAT has been changed from the one previously received (step S552). If the value of PMT_PID has been changed, the transport decoder 51 carries out AV muting, stops AV decoding, stops receiving a PCR, and stops receiving a PMT (steps S153 through S156). Then, while the PATs not containing PMT_PID are coming, AV muting and stop of AV decoding and PCR and PMT receiving are continued (step S557, No).

When any PAT received contains PMT_PID (step S557, Yes), the transport decoder 51 resumes receiving a PMT corresponding to the newly changed PMT_PID (step S158), and receives the PCR contained in the PMT (step S159). The video decoder 53 then starts decoding of video contained in the new PMT, and cancels video muting (step S160). The audio decoder 52 starts decoding of audio contained in the new PMT, and cancels audio muting (step S161).

FIG. 15 shows a relation between the partial TS outputted from the MPEG encoding apparatus using the scheme of the fifth embodiment and the operation timing of the MPEG decoding apparatus 50.

When receiving an instruction of channel switching, the MPEG encoding apparatus 10 changes PMT_PID of the PAT from "500" to "501" (timing *a*). The MPEG encoding apparatus 10 then switches the analog stream from UV1ch to UV5ch (timing *b*).

The MPEG decoding apparatus 50 detects the change in PMT_PID of the PAT, and executes AV muting, stops AV decoding, and stops receiving a PCR and a PMT for UV1ch (timing *a*). This stop of AV decoding deletes the UV1ch stream remaining the buffers of the video decoder 53 and the audio decoder 52. On receiving a new PMT, the MPEG decoding apparatus 50 then receives a PCR, and starts AV decoding for UV5ch (timing *c*). When the first decoding for UV5ch is completed, the MPEG decoding apparatus 50 cancels AV muting (timing *d*).

As stated above, according to the scheme of the fifth embodiment of the present invention, the encoding side changes PMT_PID of the PAT according to switching of the input analog stream. With this change, the decoding side executes video and audio muting, stops decoding, and clears the buffers of the video decoder and the audio decoder. Therefore, even if the encoded stream outputted from the encoding side becomes discontinuous due to the change in the input analog stream, stream reproduction can be carried out without causing distortion in video and audio.

In the fifth embodiment, the case where switching of the input analog stream is carried out without stopping encoding has been described. Alternatively, encoding may be stopped by generating a PAT containing invalid PMT_PID, and then a PAT and a PMT each provided with a new PID may be generated for resuming encoding (refer to the second embodiment).

### (Sixth embodiment)

A sixth embodiment is directed to a scheme of inserting a DIT with transition_flag "1" in an encoded stream. With reference to FIGS. 16 through 18, the scheme of the sixth embodiment is described.

FIG. 16 is a flowchart showing the operation of the MPEG encoding apparatus 10 when an input analog stream is switched in the sixth embodiment. FIG. 17 is a flowchart showing the operation of the MPEG decoding apparatus 50 when a partial TS encoded according to FIG. 16 is reproduced via a digital interface standardized in IEEE 1394, for example. Note that, in FIGS. 16 and 17, steps of carrying out the same operations as those in FIGS. 2 and 3 are provided with the same step numbers.

With reference to FIG. 16, the operation of the MPEG encoding apparatus 10 is described.

When an instruction of switching the analog stream is issued, the CPU 21 instructs the DIT generating section 18 to output a DIT having transition_flag = 1 (step S601). Following the instruction from the CPU 21, the DIT generating section 18 generates such a DIT as described above (step S602). The DIT generating section 18 replaces successive two TS packets of the encoded stream with the generated DIT (step S603). The CPU 21 instructs the input stream switching section 11 to switch the analog stream (step S103). The input stream switching section 11 switches the analog stream into the one designated by the CPU 21 (step S104). The PCR generating section 14, the video ES generating section 12, and the audio ES generating section 13 encode the newly switched analog stream (step S105 through S107). The multiplex section 19 multiplexes the generated ESs and tables, and outputs a partial TS (step S108).

With reference to FIG. 17, the operation of the MPEG decoding apparatus 50 is described.

The transport decoder 51 is supplied with the partial TS sent from the MPEG encoding apparatus 10, and determines whether a DIT containing transition_flag = 1 has been received (step S651). When a DIT has been received, the transport decoder 51 carries out AV muting, stops AV decoding, receiving a PCR, receiving a PMT, and receiving a PAT (steps S153 through S156, S652). The transport decoder 51 receives a new PAT, and determines whether valid program_number has been written in the received PAT (step S151, S157). When any valid program_number has been written (step S157, Yes), the transport decoder 51 resumes receiving a PMT corresponding to the new changed program_number (step S158), and receives a PCR contained in the PMT (step S159). The video decoder 53 starts decoding of video contained in the new PMT and cancels video muting (step S160). The audio decoder 52 starts decoding of audio contained in the new PMT, and cancels audio muting (step S161).

FIG. 18 shows a relation between the partial TS outputted from the MPEG encoding apparatus 10 using the scheme of the sixth embodiment and the operation timing of the MPEG decoding apparatus 50.

On receiving an instruction of channel switching, the MPEG encoding apparatus 10 inserts a DIT having transition_flag = 1 in the encoded stream (timing a). The MPEG encoding apparatus 10 then switches the analog stream from UV1ch to UV5ch.

The MPEG decoding apparatus 50 detects the DIT containing transition_flag = 1, executes AV muting, and stops AV decoding, receiving a PCR, a PMT, and a PAT for UV1ch (timing *a*). This stop of AV decoding deletes the UV1ch stream remaining in the buffers of the video decoder 53 and the audio decoder 52. On receiving a new PAT, the MPEG decoding apparatus 50 then starts receiving a PMT corresponding to a new PAT received (timing *b*). Then, when the corresponding PMT is received, the MPEG decoding apparatus 50 starts receiving a PCR and AV decoding for UV5ch (timing *c*). Note that a cycle of PAT and PMT retransmission is 100msec. When the first decoding for UV5ch is completed, the MPEG decoding apparatus 50 then cancels AV muting (timing *d*).

As stated above, according to the scheme of the sixth embodiment of the present invention, the encoding side inserts a DIT containing transition_flag = 1 in the encoded stream according to switching of the input analog stream. Thus, the decoding side carries out video and audio muting, stops decoding, and clears the buffers of the video decoder and the audio decoder. Therefore, even if the encoded stream outputted from the encoding side becomes discontinuous due to the change in the input analog stream, stream reproduction can be carried out without causing distortion in video and audio.

In the sixth embodiment, the case where switching of the input analog stream is carried out without stopping encoding has been described. Alternatively, encoding may be temporarily stopped after inserting a DIT containing transition_flag = 1 in the encoded stream, and be resumed thereafter(refer to the second embodiment).

### (Seventh embodiment)

In a seventh embodiment, described is a scheme of writing information as to a channel number at the time of changing program_number at the MPEG encoding apparatus side, thereby capable of display the channel number at the time of reproduction at the MPEG decoding apparatus side. Hereinafter described is the scheme of the seventh embodiment with reference to FIGS. 19, 20A, and 20B.

FIG. 19 is a block diagram illustrating the construction of an MPEG decoding apparatus 60 according to the seventh embodiment. As illustrated in FIG. 19, the MPEG decoding apparatus 60 has the construction of the MPEG decoding apparatus 50 with an image combiner 61 added thereto. FIGS. 20A and 20B are examples of an image displayed on a monitor 57 illustrated in FIG. 19.

The operation of the MPEG encoding apparatus 10 is described.

When an instruction of switching the analog stream is issued, the CPU 21 obtains channel information of the analog stream, and reports, to the PAT generating section 15, the value of program_number according to a predetermined representation. Here, the predetermined representation is, for example to represent the channel number of the input analog stream by lower two or three bits. By way of example only, when the channel number is UV5ch, the CPU 21 reports program_number = "0x0005" to the PAT generating section 15. Furthermore, the type of the input analog stream may be represented by the most significant bit. By way of example only, when a type "ground wave" is defined as "1" and the channel number is UV5ch, the CPU 21 reports program_number = "0x1005" to the PAT generating section 15.

The PAT generating section 15 generates a PAT containing program_number reported by the CPU 21. The CPU 21 then instructs the input stream switching section 11 to switch the analog stream. The input stream switching section 11 switches the analog stream to the one designated by the CPU 21. The PCR generating section 14, the video ES generating section 12, and the audio ES generating section 13 encode the switched new analog stream. The multiplex section 19 multiplexes the generated ESs and tables to output a partial TS.

With reference to FIG. 19, the operation of the MPEG decoding apparatus 60 is described.

The transport decoder 51 is supplied with the partial TS sent from the MPEG encoding apparatus 10. The transport decoder 51 determines whether any PAT has been received. If received, the transport decoder 51 detects the value of program_number contained in the received PAT. The detected value of program_number is analyzed by a CPU 54. A video stream received by the transport decoder 51 is decoded by the video decoder 53 into video information, and then outputted to the image combiner 61. The image combiner 61 generates a video signal by multiplexing the video information after decoding with service information (channel information) according to analysis results of program_number provided from the CPU 54.

Thus, it is possible to display the channel information on the monitor 57 as illustrated in FIGS. 20A and 20B. Such display of the channel information using the value of the program_number can also be used for displaying a list of programs digitally recorded on a DVHS tape or the like.

As such, if the program_number contained in the PAT is capable of uniquely identifying the stream, it is possible to provide playback channel display, recorded program list display, etc., that are easy to understand for users.

The schemes described in the first through seventh embodiments can be achieved typically by CPU executing predetermined program data that is stored in a storage device (ROM, RAM, hard disk, etc.,) and is capable of executing the above-described processing. In this case, the program data may be installed in the storage device via a storage medium such as a CD-ROM or a flexible disk, or may be executed directly from the storage medium.

Note that the PAT, PMT, DIT, SIT, program_number, PMT_PID, ES_PID, and PCR_PID are merely examples where the ARIB standards are applied. Therefore, it is possible to achieve the present invention by using, instead of the PAT, a table that specifies the PID of the TS packet for transmitting a service-related table; by using, instead of the PMT, a table that specifies the PID of the TS packet for transmitting an elementary stream composing the service; by using, instead of the DIT, a table containing information indicating a point of discontinuity of the service; by using, instead of the SIT, a table containing a summary of program arrangement information required for providing service information; by using, instead of program_number, an identifier of the service to be provided; by using, instead of PMT_PID, a PID of a table related to the service to be provided; by using, instead of ES_PID, a PID of the elementary stream; and by using, instead of PCR_PID, a PID of a program clock reference.

While the invention has been described in detail, the foregoing description is in all aspects illustrative and not restrictive. It is understood that numerous other modifications and variations can be devised without departing from the scope of the invention.

## Claims

1. An MPEG encoding apparatus that generates an MPEG transport stream from an analog stream, comprising:
an input stream switching section (11) for selecting the analog stream from a plurality of input analog streams in response to a switching instruction;
a video ES generating section (12) for encoding and compressing video information of the analog stream selected by the input stream selecting section (11);
an audio ES generating section (13) for encoding and compressing audio information of the analog stream selected by the input stream selecting section (11);
a table generating section (14, 15, 16, 17) for generating a predetermined information table required for encoding of the selected analog stream; and
a multiplex section (19) for multiplexing information generated by the video ES generating section (12), the audio ES generating section (13), and the table generating section (14, 15, 16, 17), and outputting an encoded stream, wherein
when the input stream switching section (11) selects another analog stream in response to another switching instruction, the table generating section (14, 15, 17) generates the information table with a specific value contained therein updated so as to cause a decoding apparatus to stop decoding.

2. The MPEG encoding apparatus according to claim 1,
wherein
the table generating section (15) updates a service identifier of a service to be provided, the service identifier being contained in the information table for specifying a packet identifier (PID) of a TS packet for transmitting a service-related table.

3. The MPEG encoding apparatus according to claim 1,
wherein
the table generating section (17) updates a packet identifier (PID) of an elementary stream, the PID being contained in the information table for specifying a PID of a TS packet for transmitting the elementary stream composing a service.

4. The MPEG encoding apparatus according to claim 1,
wherein
the table generating section (17) updates a packet identifier (PID) of a program clock reference, the PID being contained in the information table for specifying a PID of a TS packet for transmitting the elementary stream composing a service.

5. The MPEG encoding apparatus according to claim 1,
wherein
the table generating section (15) updates a packet identifier (PID) of a table related to a service to be provided, the PID being contained in the information table for specifying a PID of a TS packet for transmitting a service-related table.

6. The MPEG encoding apparatus according to claim 2,
wherein
the table generating section (15) updates program_number of a PAT.

7. The MPEG encoding apparatus according to claim 3,
wherein
the table generating section (17) updates ES_PID of a PMT.

8. The MPEG encoding apparatus according to claim 4,
wherein
the table generating section (17) updates PCR_PID of a PMT.

9. The MPEG encoding apparatus according to claim 5,
wherein
the table generating section (15) updates PMT_PID of a PAT.

10. The MPEG encoding apparatus according to claim 6,
wherein
the table generating section (15) updates the specific value by incrementing the specific value before switching.

11. The MPEG encoding apparatus according to claim 7,
wherein
the table generating section (17) updates the specific value by incrementing the specific value before switching.

12. The MPEG encoding apparatus according to claim 8,
wherein
the table generating section (17) updates the specific value by incrementing the specific value before switching.

13. The MPEG encoding apparatus according to claim 9,
wherein
the table generating section (15) updates the specific value by incrementing the specific value before switching.

14. The MPEG encoding apparatus according to claim 6,
wherein
the table generating section (15) stores the updated specific value in a non-volatile memory, and uses the updated specific value from the non-volatile memory when the MPEG encoding apparatus is turned on.

15. The MPEG encoding apparatus according to claim 7,
wherein
the table generating section (17) stores the updated specific value in a non-volatile memory, and uses the updated specific value from the non-volatile memory when the MPEG encoding apparatus is turned on.

16. The MPEG encoding apparatus according to claim 8,
wherein
the table generating section (17) stores the updated specific value in a non-volatile memory, and uses the updated specific value from the non-volatile memory when the MPEG encoding apparatus is turned on.

17. The MPEG encoding apparatus according to claim 9,
wherein
the table generating section (15) stores the updated specific value in a non-volatile memory, and uses the updated specific value from the non-volatile memory when the MPEG encoding apparatus is turned on.

18. An MPEG encoding apparatus for generating an MPEG transport stream from an analog stream, comprising:
an input stream switching section (11) for selecting the analog stream from a plurality of input analog streams in response to a switching instruction;
a video ES generating section (12) for encoding and compressing video information of the analog stream selected by the input stream selecting section (11);
an audio ES generating section (13) for encoding and compressing audio information of the analog stream selected by the input stream selecting section (11);
a table generating section (14, 15, 16, 17, 18, 20) for generating a predetermined information table required for encoding of the selected analog stream; and
a multiplex section (19) for multiplexing information generated by the video ES generating section (12), the audio ES generating section (13), and the table generating section (14, 15, 16, 17), and outputting an encoded stream, wherein
when the input stream switching section (11) selects another analog stream in response to another switching instruction, the table generating section (18, 20) generates a table containing information indicating a point of discontinuity in the encoded stream so as to cause a decoding apparatus to stop decoding, and inserts the generated table in the encoded stream.

19. The MPEG encoding apparatus according to claim 18,
wherein
the table containing information indicating the point of discontinuity in the encoded stream is a DIT.

20. An MPEG encoding apparatus that generates an MPEG transport stream from an analog stream, comprising:
an input stream switching section (11) for selecting the analog stream from a plurality of input analog streams in response to a switching instruction;
a video ES generating section (12) for encoding and compressing video information of the analog stream selected by the input stream selecting section (11);
an audio ES generating section (13) for encoding and compressing audio information of the analog stream selected by the input stream selecting section (11);
a table generating section (14, 15, 16, 17) for generating a predetermined information table required for encoding of the selected analog stream; and
a multiplex section (19) for multiplexing information generated by the video ES generating section (12), the audio ES generating section (13), and the table generating section (14, 15, 16, 17), and outputting an encoded stream, wherein
when the input stream switching section (11) selects another analog stream in response to another switching instruction, the table generating section (14, 15, 17) generates the information table with a specific value contained therein updated so as to cause a decoding apparatus to stop decoding, and the multiplex section (19) temporarily stops outputting the encoded stream corresponding to the analog stream before switching, and then resumes outputting an encoded stream corresponding to the other analog stream selected in response to the other switching instruction.

21. The MPEG encoding apparatus according to claim 20,
wherein
the table generating section (15) generates the information table for specifying a packet identifier (PID) of a TS packet for transmitting a service-related table, the information table containing an invalid service identifier of a service to be provided, so as to cause the multiplex section (19) to stop outputting the encoded stream, and generates the information table with the PID updated so as to cause the multiplex section (19) to resume outputting the encoded stream.

22. The MPEG encoding apparatus according to claim 20,
wherein
the table generating section (17) generates the information table for specifying a packet identifier (PID) of a TS packet for transmitting an elementary stream composing a service, the information table not containing a PID of the elementary stream, so as to cause the multiplex section (19) to stop outputting the encoded stream, and generates the information table with the PID of the elementary stream updated so as to cause the multiplex section (19) to resume outputting the encoded stream.

23. The MPEG encoding apparatus according to claim 20,
wherein
the table generating section (17) generates the information table for specifying a packet identifier (PID) of a TS packet for transmitting an elementary stream composing a service, the information table containing an invalid PID of a program clock reference, so as to cause the multiplex section (19) to stop outputting the encoded stream, and generates the information table with the PID of the program clock reference updated so as to cause the multiplex section (19) to resume outputting the encoded stream.

24. The MPEG encoding apparatus according to claim 21,
wherein
the service identifier is program_number, and the information table is a PAT.

25. The MPEG encoding apparatus according to claim 22,
wherein
the PID of the elementary stream is ES_PID, and the information table is a PMT.

26. The MPEG encoding apparatus according to claim 23,
wherein
the PID of the program clock reference is PCR_PID, and the information table is a PMT.

27. An MPEG encoding apparatus that generates an MPEG transport stream from an analog stream, comprising:
an input stream switching section (11) for selecting the analog stream from a plurality of input analog streams in response to a switching instruction;
a video ES generating section (12) for encoding and compressing video information of the analog stream selected by the input stream selecting section (11);
an audio ES generating section (13) for encoding and compressing audio information of the analog stream selected by the input stream selecting section (11);
a table generating section (14, 15, 16, 17) for generating a predetermined information table required for encoding of the selected analog stream; and
a multiplex section (19) for multiplexing information generated by the video ES generating section (12), the audio ES generating section (13), and the table generating section (14, 15, 16, 17), and outputting an encoded stream, wherein
the table generating section (15) generates the information table for specifying a packet identifier (PID) of a TS packet for transmitting a service-related table, the information table containing a service identifier of a service to be provided, the service identifier being uniquely varied according to a type or a channel number of the analog stream selected by the input stream switching section (11).

28. The MPEG encoding apparatus according to 27,
wherein
the service identifier is program_number, and the information table is a PAT.

29. An MPEG decoding apparatus that reproduces an MPEG transport stream outputted from an encoding apparatus, wherein
at the time of reproducing, information about a stream is displayed based on a service identifier of a service to be provided, the service identifier contained in an information table for specifying a packet identifier (PID) of a TS packet for transmitting a service-related table, the service identifier being uniquely varied by the encoding apparatus according to a type or a channel number of the stream.

30. The MPEG decoding apparatus according to claim 29,
wherein
the service identifier is program_number, and the information table is a PAT.

31. A program for making a computer device execute a method of generating an MPEG transport stream from an analog stream, the method comprising the steps of:
selecting the analog stream from a plurality of input analog streams in response to a switching instruction;
encoding and compressing video information and audio information of the selected analog stream;
generating a predetermined information table required for encoding of the selected analog stream, the information table with a specific value contained therein updated when another input analog stream is selected, so as to cause a decoding side to stop decoding; and
multiplexing information generated in the encoding step and the generating step, and outputting an encoded stream.

32. The program according to claim 31, wherein
in the generating step, a service identifier of a service to be provided is updated, the service identifier being contained in the information table for specifying a packet identifier (PID) of a TS packet for transmitting a service-related table.

33. The program according to claim 31, wherein
in the generating step, a packet identifier (PID) of an elementary stream is updated, the PID being contained in the information table for specifying a PID of a TS packet for transmitting the elementary stream composing a service.

34. The program according to claim 31, wherein
in the generating step, a packet identifier (PID) of a program clock reference is updated, the PID being contained in the information table for specifying a PID of a TS packet for transmitting the elementary stream composing a service.

35. The program according to claim 31, wherein
in the generating step, a packet identifier (PID) of a table related to a service to be provided is updated, the PID being contained in the information table for specifying a PID of a TS packet for transmitting a service-related table.

36. A program for making a computer device execute a method of generating an MPEG transport stream from an analog stream, the method comprising the steps of:
selecting the analog stream from a plurality of input analog streams in response to a switching instruction;
encoding and compressing video information and audio information of the selected analog stream;
generating a predetermined information table required for encoding of the selected analog stream;
multiplexing information generated in the encoding step and the generating step, and outputting an encoded stream; and
when another analog stream is selected, generating a table containing information indicating a point of discontinuity in the encoded stream so as to cause a decoding side to stop decoding, and inserting the generated table in the encoded stream.

37. The program according to claim 31, wherein
the method further comprises the steps of:
temporarily stopping outputting the encoded stream corresponding to the analog stream before switching; and
resuming outputting the encoded stream corresponding to an analog stream selected next after a predetermined time has passed.

38. The program according to claim 37, wherein
in the generating step, the information table for specifying a packet identifier (PID) of a TS packet for transmitting a service-related table is generated, the information table containing an invalid service identifier of a service to be provided, so that outputting the encoded stream is stopped, and the information table with the PID updated is generated so that outputting the encoded stream is resumed.

39. The program according to claim 37, wherein
in the generating step, the information table for specifying a packet identifier (PID) of a TS packet for transmitting an elementary stream composing a service is generated, the information table not containing a PID of the elementary stream, so that outputting the encoded stream is stopped, and the information table with the PID of the elementary stream updated is generated so that outputting the encoded stream is resumed.

40. The program according to claim 37, wherein
in the generating step, the information table for specifying a packet identifier (PID) of a TS packet for transmitting an elementary stream composing a service is generated, the information table containing an invalid PID of a program clock reference, so that outputting the encoded stream is stopped, and the information table with the PID of the program clock reference updated is generated so that outputting the encoded stream is resumed.

41. A program for making a computer device execute a method of generating an MPEG transport stream from an analog stream, the method comprising the steps of:
selecting the analog stream from a plurality of input analog streams in response to a switching instruction;
encoding and compressing video information and audio information of the selected analog stream;
generating an information table, which is required for encoding of the selected analog stream, for specifying a packet identifier (PID) of a TS packet for transmitting a service-related table, the information table containing a service identifier of a service to be provided, the service identifier being uniquely varied according to a type or a channel number of the analog stream; and
multiplexing information generated in the encoding step and the generating step, and outputting an encoded stream.

42. A program for making a computer device execute a method of reproducing an MPEG transport stream outputted from an encoding apparatus, the method comprising the steps of:
interpreting a service identifier of a service to be provided, the service identifier contained in an information table for specifying a packet identifier (PID) of a TS packet for transmitting a service-related table, the service identifier being uniquely varied by the encoding apparatus according to a type or a channel number of a stream; and
displaying, at the time of reproducing, information about the stream based on interpretation results obtained in the interpreting step.
